# EUROPÄISCHE PATENTSCHRIFT

(11) **EP 1 885 587 B1**
(45) Veröffentlichungstag und Bekanntmachung des Hinweises auf die Patenterteilung: **10.05.2017**
(21) Anmeldenummer: 06743077.7
(22) Anmeldetag: 26.05.2006
(51) Int. Cl.: B60T 13/74, B60T 7/12

(54) **VERFAHREN UND SYSTEM ZUR STEUERUNG EINER KRAFTFAHRZEUG-FESTSTELLBREMSE WÄHREND EINES HALTS**
METHOD AND SYSTEM FOR CONTROLLING AN AUTOMOTIVE PARKING BRAKE DURING A STOP
PROCEDE ET SYSTEME POUR COMMANDER UN FREIN DE STATIONNEMENT D'UN VEHICULE A MOTEUR A L'ARRET

(30) Priorität: 31.05.2005 DE 102005024834
(43) Veröffentlichungstag der Anmeldung: 13.02.2008
(73) Patentinhaber: Lucas Automotive GmbH, 56070 Koblenz (DE)
(72) Erfinder: STRAUB, Thomas, 56179 Vallendar (DE); GILLES, Leo, 56077 Koblenz (DE); LEITER, Ralf, 56743 Mendig (DE)
(74) Vertreter: Röthinger, Rainer
(86) Internationale Anmeldenummer: PCT/EP2006/005081
(87) Internationale Veröffentlichungsnummer: WO 2006/128651

(56) Entgegenhaltungen:
- DE-A1- 4 129 919
- DE-A1- 19 836 687
- US-A- 4 629 043

## Beschreibung

### Gebiet der Erfindung

Die Erfindung betrifft ein Verfahren und ein System zur Steuerung einer Feststellbremse eines Kraftfahrzeugs während eines Halts.

### Hintergrund der Erfindung

Zur Erhöhung des Komforts bei Fahrzeugen ist es bekannt, die Feststellbremse (auch Parkbremse genannt) elektrisch zu betätigten. Die Feststellbremse wird z. B. automatisch aktiviert, d. h. gespannt, sobald sich das Fahrzeug im Stillstand befindet und automatisch deaktiviert, d. h. gelöst, sobald ein Anfahrvorgang des Fahrzeugs angefordert oder erkannt wird. Bei der automatischen Aktivierung der Feststellbremse wird die Feststellbremse üblicherweise mit einem Maximalwert gespannt, um so einen sicheren Stand des Fahrzeugs zu gewährleisten.Das gattungsgemäße Dokument US 4,629,043 zeigt ein Verfahren zur Steuerung einer Feststellbremse nach dem Oberbegriff des Anspruchs 1.

Beim automatischen Lösen der Feststellbremse (beispielsweise als Reaktion auf einen angeforderten Anfahrvorgang) besteht jedoch das Problem, dass die Feststellbremse bedingt durch die Verzögerung, die zwischen dem Erkennen des Anfahrvorgangs und dem vollständigen Lösen der Feststellbremse auftritt, nicht schnell genug vollständig gelöst werden kann, wodurch ein ungehinderter Anfahrvorgang oftmals nicht möglich ist. Der Fahrer verspürt dann beispielsweise einen Ruck.

Der Erfindung liegt die Aufgabe zugrunde, ein Verfahren und ein System zur Steuerung eines mit einer Feststellbremse ausgestatteten Fahrzeugs zur Verfügung zu stellen, die ein komfortableres Anfahren ermöglichen.

### Kurzer Abriss der Erfindung

Erfindungsgemäß wird die Spannkraft der Feststellbremse in Abhängigkeit des Betätigungszustandes der Feststellbremse und dem Vorhandensein eines Zündungssignals auf einen ersten Wert eingestellt, wobei der erste Wert geringer ist als ein zweiter Wert, der beim Abstellen des Fahrzeugs eingestellt wird, aber ausreicht, das Kraftfahrzeug in einer gegenwärtigen Position zu halten. Dabei kann die Spannkraft von dem zweiten Wert auf den ersten Wert reduziert werden, wenn die Feststellbremse sich in gespanntem Betätigungszustand befindet. Die Spannkraft kann aber auch auf den ersten Wert erhöht werden, wenn die Feststellbremse sich in gelöstem Betätigungszustand befindet. Der erste bzw. der zweite Wert können auch innerhalb eines ersten bzw. zweiten Wertebereichs liegen.

Der erste Wert ist geringer als der zweite Wert (wobei sowohl der erste Wert als auch der zweite Wert in Abhängigkeit von einer Fahrbahnneigung dynamisch gewählt sein können). Dadurch kann die benötige Zeit zum Lösen der Feststellbremse im Vergleich zu einer mit dem zweiten Wert (z.B. einem Maximalwert) gespannten Feststellbremse verringert werden, wodurch ein komfortableres und schnelleres Anfahren ermöglicht wird. Da die Feststellbremse nicht in jedem Fall mit der maximalen Spannkraft beaufschlagt wird, wird außerdem das Lastprofil der Feststellbremse optimiert. Durch diese Optimierung sinkt die Belastung der Feststellbremse und es tritt ein geringerer Verschleiß an der Feststellbremse auf. Dies führt zu einer Verlängerung der Wartungsintervalle und zu einer Erhöhung der Lebensdauer der Feststellbremse.

Dieser Ansatz kann unter Verwendung verschiedener Erfassungseinrichtungen ausgestaltet werden. Beispielsweise kann das Zündungssignal, d. h. ist die Zündung eingeschaltet ("EIN") oder nicht ("AUS"), ausgewertet werden, um so zwischen einem Halten bzw. Anhalten des Fahrzeugs und einem Abstellen des Fahrzeugs zu unterscheiden. Unter Halten bzw. Anhalten ist dabei ein kurzzeitiger Stopp des Fahrzeugs an einer Ampel, Kreuzung etc. zu verstehen. Unter Abstellen des Fahrzeugs ist das endgültige Parken (und häufig das Verlassen des Fahrzeugs durch den Fahrer) zu verstehen. Von einem endgültigen Parken kann z.B. auch dann ausgegangen werden, wenn die Zündung ausgeschaltet wird oder der Fahrer manuell eine Betätigung der Feststellbremse anfordert. Solange noch nicht feststeht, ob das Fahrzeug endgültig geparkt ist, kann von einem Halten bzw. Anhalten ausgegangen werden.

Weiterhin kann der Betätigungszustand der Feststellbremse mittels einer geeigneten Einrichtung erfasst werden. Dabei kann der Betätigungszustand der Feststellbremse zwischen vollständig gelöst und voll gespannt variieren, d. h. die Spannkraft der Feststellbremse kann einen Wert zwischen Null (gelöst) und voll gespannt aufweisen.

Es sind aber auch alle Zwischenwerte (wie zum Beispiel 30, 50 oder 70% gespannt) möglich.

Bei einer Weiterbildung kann die Spannkraft vom ersten Wert auf den zweiten Wert erhöht werden, wenn das Zündungssignal nicht mehr vorhanden ist ("AUS"). Durch die Erhöhung der Spannkraft auf den zweiten Wert wird sichergestellt, dass die Feststellbremse mit einer höheren (z.B. maximalen) Spannkraft beaufschlagt wird, wenn das Fahrzeug endgültig geparkt werden soll. Es ist in alternativer oder zusätzlicher Weise möglich, die Spannkraft der Feststellbremse auf den zweiten Wert einzustellen, wenn die Motorhaube, der Kofferraum oder eine Fahrzeugtür geöffnet wird.

Es kann ferner ein Signal, das einem Fahrerwunsch zum Schließen (Spannen) der Feststellbremse entspricht, erfasst werden. Ist dieses Signal vorhanden, kann die Spannkraft der Feststellbremse je nach derzeitigem Betätigungszustand (und ggf. weiterer Parameter) auf den ersten oder zweiten Wert erhöht werden. Das Signal kann durch Betätigen eines Hebels oder Knopfes in Reichweite des Fahrers erzeugt werden.

Eine weitere Ausbildung besteht darin, die Spannkraft der Feststellbremse in Abhängigkeit eines Signals einzustellen, das über die Anwesenheit des Fahrers Auskunft gibt. Dabei kann die Spannkraft der Feststellbremse auf den zweiten Wert erhöht werden, wenn das entsprechende Signal nicht (oder nicht mehr) vorhanden ist, d. h. wenn der Fahrer nicht im Innenraum des Fahrzeugs ist (u. U. selbst wenn die Zündung eingeschaltet ist). Ferner ist es denkbar, bei Erfassen eines Fahreranwesentheitssignals die Spannkraft dann zu erhöhen (beispielsweise vom ersten auf den zweiten Wert oder bei gelöster Feststellbremse auf den ersten oder den zweiten Wert), wenn ein unbeabsichtigtes Wegrollen des Fahrzeugs verhindert oder unterbunden werden muss. Das Fahreranwesenheitssignal kann durch eine Sitzbelegungserkennungseinrichtung erzeugt werden, die mittels Innenraumkamera, Gewichtssensoren und/oder Sensoren, die das Anlegen des Fahrergurts erkennen, die Präsenz des Fahrers erkennt.

Vorzugsweise wird bei dem erfindungsgemäßen Verfahren bzw. System mindestens ein weiterer Fahrzeugzustandsparameter erfasst. Dieser Parameter kann durch einen Neigungssensor, einen Rücklaufsensor und/oder andere geeignete Signale von einem elektronischen Steuergerät (ECU) bereitgestellt werden. Basierend auf diesem Parameter kann der erste Wert der Spannkraft der Feststellbremse (z. B. neigungsabhängig) derart eingestellt werden, dass sichergestellt ist, dass das Kraftfahrzeug in einer gegenwärtigen Position gehalten wird.

Bei einer möglichen Ausbildung beträgt der erste Wert 5 bis 13 kN, insbesondere 7 bis 11 kN (z. B. 9 kN), und der zweiten Wert 13 bis 21 kN, insbesondere 15 bis 19 kN (z. B. 17 kN). Es ist aber auch möglich, dem ersten bzw. zweiten Wert andere Beträge zuzuordnen, solange gewährleistet ist, dass immer eine sicherheitsrelevante Zuspannkraft an der Feststellbremse anliegt. Des Weiteren kann der ersten Wert so bemessen werden, dass er gerade ausreicht, das Fahrzeug in der gegenwärtigen Position zu halten ("Minimalwert").

Das erfindungsgemäße Verfahren bzw. System kann bei einer elektrischen Feststellbremse (EPB), einer hydraulischen Feststellbremse (HPB), einer elektromechanischen Bremse (EMB) oder einer elektromechanischen Feststellbremse (EMF) zur Anwendung kommen.

Bei der HPB kann der erste Wert für die Spannkraft der Feststellbremse dadurch erreicht werden, dass in der Ebene oder bei geringen Steigungen (etwa bis 15%) nur die Aktuatoren elektrisch zugefahren werden, ohne dass die hydraulische Zuspannunterstützung eingreift. Zum schnelleren Lösen der HPB müssen somit nur die Aktuatoren freigegeben werden, ohne dass ein hydraulischer Druck abgebaut werden müsste.

Der erfindungsgemäße Feststellbremsen-Steuereingriff kann sich auf ein einzelnes, auf mehrere oder auf alle Radbremsen eines Kraftfahrzeugs beziehen. Auch können einzelne Gruppen von Radbremsen definiert werden, auf die sich ein Steuereingriff bezieht. Beispielsweise können die Radbremsen seitenweise (linke Kraftfahrzeugseite/ rechte Kraftfahrzeugseite) geöffnet oder geschlossen werden.

Ferner kann eine Fahrerwarneinrichtung vorgesehen werden, die den Fahrer auf einen Steuereingriff hinweist. Die Fahrerwarneinrichtung kann den Fahrer auf optische, akustische und/oder haptische Weise über den Eingriff in Kenntnis setzen.

### Kurze Beschreibung der Zeichnungen

Weitere Vorteile und Ausgestaltungen der Erfindung ergeben sich aus der nachfolgenden Beschreibung des bevorzugten Ausführungsbeispiels und aus den Figuren. Es zeigen:
- Fig. 1: ein Flussdiagramm eines ersten Ausführungsbeispiels des erfindungsgemäßen Verfahrens zur Steuerung einer Feststellbremse;
- Fig. 2: ein Flussdiagramm eines weiteren Ausführungsbeispiels des erfindungsgemäßen Verfahrens zur Steuerung einer Feststellbremse; und
- Fig. 3: ein Blockschaltbild des erfindungsgemäßen Systems zur Steuerung einer Feststellbremse.

### Beschreibung eines bevorzugten Ausführungsbeispiels

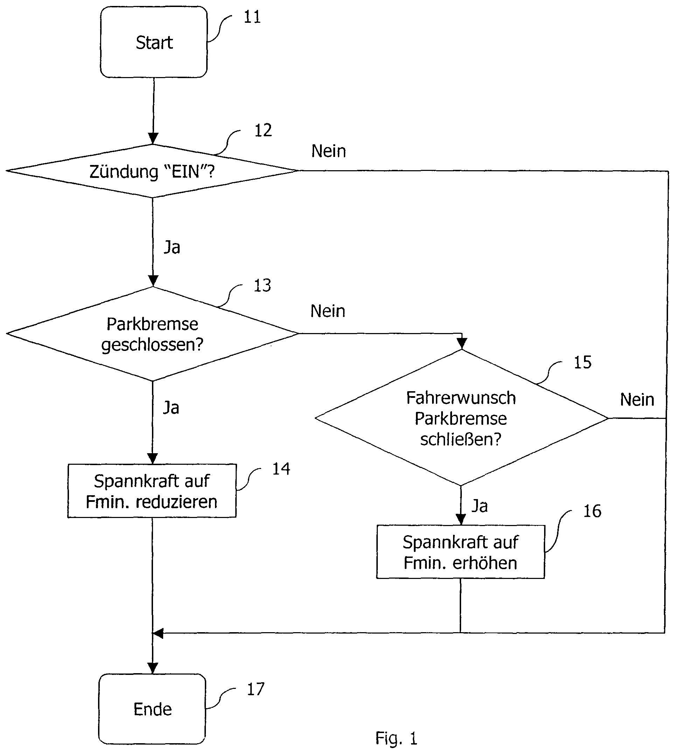

Das in Fig. 1 dargestellte Flussdiagramm zeigt schematisch die Schritte eines Verfahrens zur Steuerung einer elektrischen Feststellbremse gemäß einem ersten Ausführungsbeispiel.

In einem ersten Verfahrensschritt 12 wird das Vorhandensein eines Zündungssignals mittels eines geeigneten Sensors wie z. B. eines Zündsignalsensor oder dergleichen erfasst. In einem zweiten Verfahrensschritt 13 wird überprüft, ob die Feststellbremse geschlossen ist (z. B. ob die Feststellbremse mit ihrem Maximalwert oder innerhalb eines bestimmten Maximalwertbereichs gespannt ist). Dies kann an den Aktuatoren der Feststellbremse mittels eines Kraftsensors oder eines Wegsensors oder mittels eines Motorstromerhöhungsgradientens, einer Spindelwegermittlung, der Stromaufnahme oder dergleichen festgestellt werden.

Falls im Schritt 13 festgestellt wird, dass die Feststellbremse geschlossen ist, wird im nächsten Verfahrensschritt 14 die Spannkraft der Feststellbremse auf einen (ggf. neigungsabhängigen) Minimalwert reduziert und auf diesem Wert gehalten. Das heißt, die Aktuatoren werden soweit geöffnet, dass die Spannkraft der Feststellbremse ausreicht, das Fahrzeug gerade in seiner gegenwärtigen Position zu halten.

Wird hingegen im Schritt 13 festgestellt, dass die Feststellbremse geöffnet ist, wird im Verfahrensschritt 15 überprüft, ob der Fahrerwunsch (oder eine vom Fahrer unabhängige Systemanforderung) besteht, die Feststellbremse zu schließen. Ist dies nicht der Fall, bleibt die Feststellbremse geöffnet und das Verfahren wird beendet. Wird im Schritt 15 hingegen ermittelt, dass die Feststellbremse geschlossen werden soll, wird die Spannkraft der Feststellbremse auf den Minimalwert erhöht und auf diesem Wert gehalten.

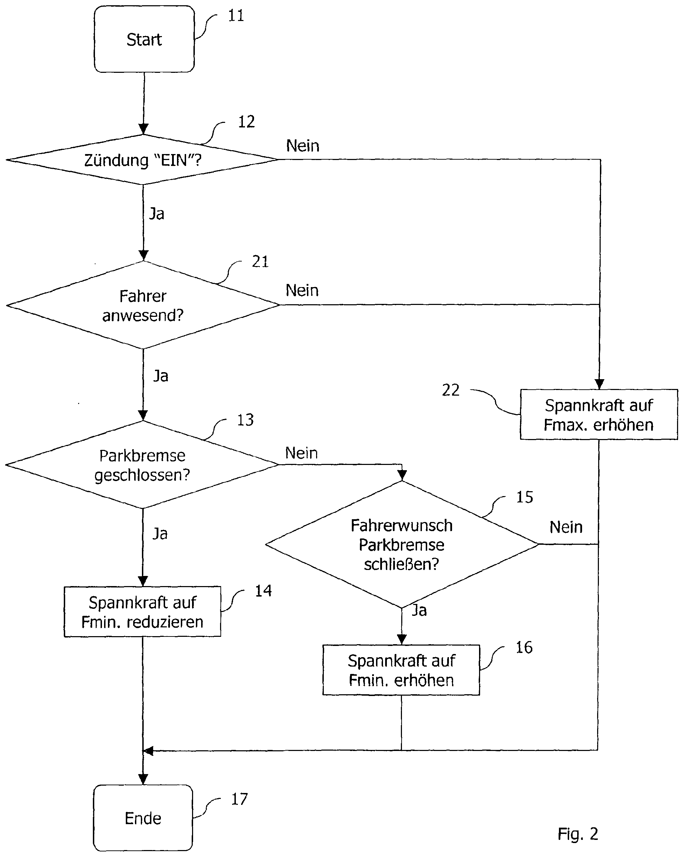

Fig. 2 zeigt ein Flussdiagramm, das ein zweites Ausführungsbeispiel eines erfindungsgemäßen Verfahrens zur Steuerung einer elektrischen Feststellbremse darstellt. Dabei bezeichnen übereinstimmende Bezugszeichen die gleichen Verfahrensschritte wie im ersten Ausführungsbeispiel.

Das zweite Ausführungsbeispiel unterscheidet sich von dem in Fig. 1 dargestellten dadurch, dass nach Schritt 12 im Verfahrensschritt 21 die Anwesenheit des Fahrers erfasst wird. Die Erfassung der Fahreranwesenheit kann mittels einer Innenraumkamera, mittels Sitzbelegungssensoren im Fahrersitz oder dergleichen erfasst werden. Ist der Fahrer im Fahrzeug anwesend, wird das Verfahren bei Schritt 13 fortgesetzt. Ist der Fahrer nicht im Fahrzeug, die Zündung hingegen eingeschaltet, wird in einem Verfahrensschritt 22 die Spannkraft der Feststellbremse auf einen Maximalwert erhöht und auf diesem Wert gehalten. Das heißt, die Aktuatoren der Feststellbremse werden soweit geschlossen, dass die Spannkraft der Feststellbremse sicherstellt, dass das Fahrzeug auch bei längeren Standzeiten sicher auf seiner gegenwärtigen Position stehen bleibt. Dabei kann der Maximalwert auch in Abhängigkeit der Fahrzeugneigung eingestellt oder nachgeregelt werden.

Im Schritt 21 kann in alternativer Weise auch ein geöffneter Kofferraum, eine geöffnete Motorhaube und/oder eine offene Fahrzeugtür erfasst werden. Tritt eine dieser Bedingungen ein, wird ebenfalls im Schritt 22 die Spannkraft der Feststellbremse auf einen Maximalwert erhöht und auf diesem Wert gehalten.

Bei einer Weiterbildung der in den Figuren 1 und 2 dargestellten Ausführungsbeispiele wird in Schritt 15 bei fehlendem Fahrerwunsch "Parkbremse schließen" (z.B. einmalig oder fortlaufend) erfasst, ob das Fahrzeug wegrollt oder wegzurollen droht. Ein Wegrollen des Fahrzeugs kann mittels eines Radsensors erfasst werden, während ein bevorstehendes Wegrollen beispielsweise mittels eines Neigungssenors oder ähnlicher Sensorik detektierbar ist. Wird ein tatsächliches oder bevorstehendes Wegrollen erfasst, wird die Spannkraft der Feststellbremse erhöht, also auf wengistens den Minimalwert und vorzugsweise auf den Maximalwert eingestellt. Dieser Sicherheitsmechanismus greift beispielsweise dann ein, wenn der Fahrer bei nicht geschlossener Feststellbremse im Fahrzeug einschläft. Zur Unterstützung des Sicherheitsmechanismus kann von einer Warneinrichtung ein akustisches Warnsignal abgegeben werden. Die Warneinrichtung kann optional auch in einem oder mehreren der Schritte 14, 16 und 22 aktiviert werden.

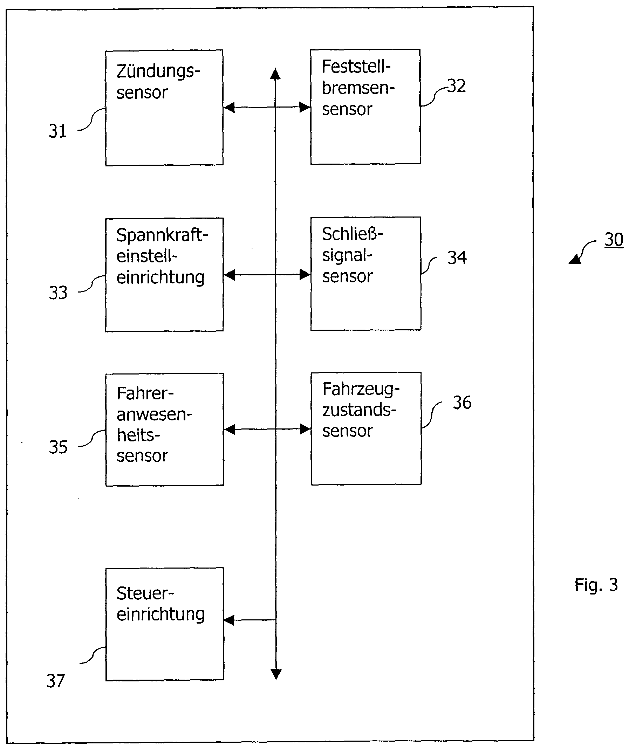

In Fig. 3 ist ein Blockschaltbild einer Ausführungsform der erfindungsgemäßen Feststellbremse gezeigt. Dabei bezeichnet Bezugszeichen 30 das gesamte System, wie es in einem Fahrzeug zur Anwendung kommen kann oder wie es in einem elektronischen Steuergerät (nicht gezeigt) implementiert sein kann. Ein Zündungssensor 31 erfasst, ob ein Zündungssignal vorhanden ist. Dabei kann die Zündung die Zustände "EIN" oder "AUS" aufweisen. Ein Feststellbremsensensor 32 erfasst einen Betätigungszustand der Feststellbremse. Die Feststellbremse kann gelöst (geöffnet) oder gespannt (geschlossen) sein. Es ist jedoch auch möglich, dass die Feststellbremse teilweise, z.B. zu 30, 50 oder 70%, gespannt ist. Eine Spannkrafteinstelleinrichtung 33 stellt die Spannkraft der Feststellbremse gemäß dem unter Bezugnahme auf die Figuren 1 und 2 beschriebenen Verfahren ein. Die Spannkrafteinstellung wird hierbei durch eine Steuereinrichtung 32 gesteuert.

Ein Schließsignalsensor 34 ermittelt, ob der Fahrer die Feststellbremse betätigen will. Der Schließsignalsensor 34 kann dabei über einen Hebel oder Knopf in Reichweite des Fahrers betätigt werden. Ein Fahreranwesenheitssensor 35 gibt ein Signal in Abhängigkeit der Präsenz des Fahrers aus. Ferner kann mindestens ein Fahrzeugzustandssensor 36 vorhanden sein. Der Fahrzeugzustandssensor 36 kann dabei einen Neigungssensor, Rücklaufsensor, Radsensor oder dergleichen umfassen. Ferner kann der Fahrzeugzustandssensor 36 auch mit den Sensoren möglicher Fahrassistenten (z.B. ABS, EPS, ACC etc.) verbunden sein. Die Ausgangssignale der Sensoren können entweder direkt in die Spannkrafteinstelleinrichtung 33 oder in die elektronische Steuereinrichtung 37 eingegeben und dort weiterverarbeitet werden.

## Patentansprüche

1. Verfahren zur Steuerung einer Feststellbremse eines Kraftfahrzeugs während eines Halts, mit den folgenden Schritten:
Erfassen eines Zündungssignals (12), Erfassen eines Betätigungszustands der Feststellbremse (13) und
Einstellen einer Spannkraft (14) der Feststellbremse auf einen ersten Wert in Abhängigkeit des Betätigungszustands der Feststellbremse, wenn das Zündungssignal vorhanden ist,
**dadurch gekennzeichnet, dass** der erste Wert geringer ist als ein zweiter Wert, der beim Abstellen des Fahrzeugs eingestellt wird, aber ausreicht, das Kraftfahrzeug in einer gegenwärtigen Position zu halten, und wobei die Spannkraft bei gespanntem Betätigungszustand der Feststellbremse von dem zweiten Wert auf den ersten Wert reduziert wird und/oder die Spannkraft bei gelöstem Betätigungszustand der Feststellbremse auf den ersten Wert erhöht wird.

2. Verfahren nach Anspruch 1, **dadurch gekennzeichnet,**
**dass** die Spannkraft vom ersten Wert auf den zweiten Wert erhöht wird, wenn das Zündungssignal nicht mehr vorhanden ist.

3. Verfahren nach Anspruch 1 oder 2, enthaltend den Schritt:
Erfassen eines Signals zum Schließen der Feststellbremse, wobei die Spannkraft auf den ersten Wert erhöht wird (16), wenn das Signal zum Schließen vorhanden ist (15).

4. Verfahren nach einem der vorangegangenen Ansprüche, enthaltend den Schritt:
Erfassen eines Fahreranwesenheitssignals (21), wobei die Spannkraft in Abhängigkeit des Fahreranwesenheitssignals eingestellt wird.

5. Verfahren nach Anspruch 4, **dadurch gekennzeichnet,**
**dass** die Spannkraft auf den zweiten Wert eingestellt wird (22), wenn das Fahreranwesenheitssignal nicht vorhanden ist.

6. Verfahren nach Anspruch 4, **dadurch gekennzeichnet,**
**dass** die Spannkraft erhöht und insbesondere auf den ersten oder den zweiten Wert eingestellt wird, wenn bei gelöstem Betätigungszustand der Feststellbremse das Fahreranwesenheitssignal vorhanden ist und ein Wegrollen oder bevorstehendes Wegrollen des Fahrzeugs erfasst wird.

7. Verfahren nach einem der vorangegangenen Ansprüche, enthaltend den Schritt:
Erfassen mindestens eines Fahrzeugzustandsparameters, insbesondere der Fahrbahnneigung, wobei die Spannkraft in Abhängigkeit des Fahrzeugszustandsparameters eingestellt wird.

8. Verfahren nach einem der vorangegangenen Ansprüche, wobei der erste Wert 5 bis 13 kN, insbesondere 7 bis 11 kN, beträgt.

9. Verfahren nach einem der vorangegangenen Ansprüche, wobei der zweite Wert 13 bis 21 kN, insbesondere 15 bis 19 kN, beträgt.

10. Verfahren nach einem der vorangegangenen Ansprüche, **dadurch gekennzeichnet,**
**dass** der erste Wert ein Minimalwert ist, gerade ausreicht, das Fahrzeug in der gegenwärtigen Position zu halten.

11. System (30) zur Steuerung einer Feststellbremse eines Kraftfahrzeugs während eines Halts, mit
einem Zündungssensor (31), um ein Zündungssignal zu erfassen,
einem Feststellbremsensensor (32), um einen Betätigungszustand der Feststellbremse zu erfassen,
einer Spannkrafteinstelleinrichtung (33), um eine Spannkraft der Feststellbremse auf einen ersten Wert in Abhängigkeit des Betätigungszustands der Feststellbremse einzustellen, wenn das Zündungssignal vorhanden ist, wobei der erste Wert geringer ist als ein zweiter Wert, der beim Abstellen des Fahrzeugs eingestellt wird, aber ausreicht, das Kraftfahrzeug in einer gegenwärtigen Position zu halten, und
mit einer Steuereinrichtung (37), die die Spannkraft von dem zweiten Wert auf den ersten Wert reduziert, wenn die Feststellbremse sich in gespanntem Betätigungszustand befindet und/oder die Spannkraft auf den ersten Wert erhöht, wenn die Feststellbremse sich in gelöstem Betätigungszustand befindet.

12. System nach Anspruch 11, mit
einem Schließsignalsensor (34), um ein Signal zum Schließen der Feststellbremse zu erfassen, wobei die Spannkrafteinstelleinrichtung (33) die Spannkraft in Abhängigkeit des Signals zum Schließen einstellt.

13. System nach Anspruch 11 oder 12, mit
einem Fahreranwesenheitssensor (35), um die Präsenz eines Fahrers zu erfassen, wobei die Spannkrafteinstelleinrichtung (33) die Spannkraft in Abhängigkeit der Präsenz des Fahrers einstellt.

14. System nach einem der Ansprüche 11 bis 13, mit
mindestens einem Fahrzeugzustandssensor (36), um mindestens einen weiteren Fahrzeugzustandsparameter zu erfassen, wobei die Spannkrafteinstelleinrichtung (33) die Spannkraft in Abhängigkeit des weiteren Fahrzeugzustandsparameters einstellt.

15. System nach Anspruch 14, **dadurch gekennzeichnet,**
**dass** der Fahrzeugzustandssensor (36) ein Neigungssensor ist.

## Claims

1. A method for controlling a parking brake of a motor vehicle during a stop, comprising the following steps:
detecting an ignition signal (12),
detecting an actuating state of the parking brake (13) and
setting an application force (14) of the parking brake to a first value dependent on the actuating state of the parking brake when the ignition signal is present,
**characterized in**
**that** the first value is lower than a second value which is set upon parking the vehicle, although is sufficient to hold the vehicle in a current position, and wherein the application force is reduced from the second value to the first value when the parking brake is in the applied actuating state and/or the application force is increased to the first value when the parking brake is in the released actuating state.

2. The method according to claim 1, **characterized in**
**that** the application force is increased from the first value to the second value when the ignition signal is no longer present.

3. The method according to claim 1 or 2, comprising the step:
detecting a signal for closing the parking brake, wherein the application force is increased (16) to the first value when the signal for closure is present (15).

4. The method according to any one of the preceding claims, comprising the step:
detecting a driver presence signal (21), wherein the application force is set dependent on the driver presence signal.

5. The method according to claim 4, **characterized in**
**that** the application force is set (22) to the second value when the driver presence signal is not present.

6. The method according to claim 4, **characterized in**
**that** the application force is increased and in particular set to the first or the second value when the driver presence signal is present and it is detected that the vehicle is rolling away or is about to roll away when the parking brake is in the released actuating state.

7. The method according to any one of the preceding claims, comprising the step:
detecting at least one vehicle state parameter, in particular the roadway gradient, wherein the application force is set dependent on the vehicle state parameter.

8. The method according to any one of the preceding claims, wherein the first value is 5 to 13 kN, in particular 7 to 11 kN.

9. The method according to any one of the preceding claims, wherein the second value is 13 to 21 kN, in particular 15 to 19 kN.

10. The method according to any one of the preceding claims, **characterized in**
**that** the first value is a minimum value, just sufficient to hold the vehicle in the current position.

11. A system (30) for controlling a parking brake of a motor vehicle during a stop, with
an ignition sensor (31) for detecting an ignition signal,
a parking brake sensor (32) for detecting an actuating state of the parking brake,
an application force setting device (33) for setting an application force of the parking brake to a first value dependent on the actuating state of the parking brake when the ignition signal is present, wherein the first value is lower than a second value which is set upon parking the vehicle, although is sufficient to hold the vehicle in a current position, and
with a control device (37) which reduces the application force from the second value to the first value when the parking brake is in the applied actuating state and/or increases the application force to the first value when the parking brake is in the released actuating state.

12. The system according to claim 11, with
a closure signal sensor (34) for detecting a signal for closing the parking brake, wherein the application force setting device (33) sets the application force dependent on the signal for closure.

13. The system according to claim 11 or 12, with
a driver presence sensor (35) for detecting the presence of a driver, wherein the application force setting device (33) sets the application force dependent on the presence of the driver.

14. The system according to any one of claims 11 to 13, with
at least one vehicle state sensor (36) for detecting at least one further vehicle state parameter, wherein the application force setting device (33) sets the application force dependent on the further vehicle state parameter.

15. The system according to claim 14, **characterized in**
**that** the vehicle state sensor (36) is a gradient sensor.

## Revendications

1. Procédé pour commander un frein de stationnement d'un véhicule à moteur à l'arrêt arrêt, comprenant les étapes suivantes :
la détection d'un signal d'allumage (12),
la détection d'un état d'actionnement du frein de stationnement (13) et
le réglage d'une force de serrage (14) du frein de stationnement sur une première valeur en fonction de l'état d'actionnement du frein de stationnement lorsque le signal d'allumage est présent,
**caractérisé en ce que** la première valeur est inférieure à une deuxième valeur réglée lors du stationnement du véhicule et suffisante pour maintenir le véhicule dans sa position momentanée, et **en ce que** la force de serrage est réduite pour passer de la deuxième à la première valeur lorsque le frein de stationnement est serré et /ou que la force de serrage est augmentée pour atteindre la première valeur lorsque le frein de stationnement est desserré.

2. Procédé selon la revendication 1, **caractérisé en ce que**
la force de serrage est augmentée pour passer de la première à la deuxième valeur lorsque le signal d'allumage n'est plus présent.

3. Procédé selon la revendication 1 ou 2, comprenant l'étape suivante :
la détection d'un signal pour serrer le frein de stationnement, la force de serrage étant augmentée pour atteindre la première valeur (16) lorsque le signal de serrage est présent (15).

4. Procédé selon l'une des revendications précédentes, comprenant l'étape suivante :
la détection d'un signal de présence de conducteur (21), la force de serrage étant réglée en fonction du signal de présence de conducteur.

5. Procédé selon la revendication 4, **caractérisé en ce que**
la force de serrage est réglée (22) sur la deuxième valeur lorsque le signal de présence de conducteur n'est pas présent.

6. Procédé selon la revendication 4, **caractérisé en ce que**
la force de serrage est augmentée et plus particulièrement réglée sur la première ou sur la deuxième valeur lorsque le signal de présence de conducteur est présent, lorsque le frein de stationnement est desserré, et qu'une mise en mouvement ou une mise en mouvement imminente du véhicule est détectée.

7. Procédé selon l'une des revendications précédentes, comprenant l'étape suivante :
la détection d'au moins un paramètre d'état du véhicule, plus particulièrement de l'inclinaison de la chaussée, la force de serrage étant réglée en fonction dudit paramètre d'état du véhicule.

8. Procédé selon l'une des revendications précédentes, la première valeur étant comprise entre 5 et 13 kN, plus particulièrement entre 7 et 11 kN.

9. Procédé selon l'une des revendications précédentes, la deuxième valeur étant comprise entre 13 et 21 kN, plus particulièrement entre 15 et 19 kN.

10. Procédé selon l'une des revendications précédentes, **caractérisé en ce que** la première valeur est une valeur minimale qui suffit à maintenir le véhicule dans sa position momentanée.

11. Système (30) pour commander un frein de stationnement d'un véhicule à moteur à l'arrêt, comprenant
un capteur d'allumage (31) servant à détecter un signal d'allumage,
un capteur de frein de stationnement (32) servant à détecter un état d'actionnement du frein de stationnement,
un dispositif de réglage de force de serrage (33) servant à régler une force de serrage du frein de stationnement sur une première valeur en fonction de l'état d'actionnement du frein de stationnement lorsque le signal d'allumage est présent, la première valeur étant inférieure à une deuxième valeur réglée lors du stationnement du véhicule et suffisante pour maintenir le véhicule dans sa position momentanée, et
comprenant un dispositif de commande (37) qui réduit la force de serrage pour la faire passer de la deuxième à la première valeur lorsque le frein de stationnement est serré et /ou qui augmente la force de serrage pour la faire passer à la première valeur lorsque le frein de stationnement se trouve à l'état desserré.

12. Système selon la revendication 11, comprenant
un capteur de signal de serrage (34) servant à détecter un signal de serrage du frein de stationnement, le dispositif de réglage de force de serrage (33) réglant la force de réglage en fonction du signal de serrage (34).

13. Système selon la revendication 11 ou 12, comprenant
un capteur de présence de conducteur (35) servant à détecter la présence d'un conducteur, le dispositif de réglage de force de serrage (33) réglant la force de réglage en fonction de la présence du conducteur.

14. Système selon l'une des revendications 11 à 13, comprenant
au moins un capteur d'état de véhicule (36) servant à détecter au moins un autre paramètre d'état du véhicule, le dispositif de réglage de force de serrage (33) réglant la force de réglage en fonction dudit autre paramètre d'état du véhicule.

15. Système selon la revendication 14, **caractérisé en ce que**
le capteur d'état de véhicule (36) est un capteur d'inclinaison.
